# EUROPEAN PATENT APPLICATION

(11) **EP 4 088 623 A2**
(43) Date of publication of application: **16.11.2022**
(21) Application number: 21712563.2
(22) Date of filing: 08.01.2021
(51) Int. Cl.: A47D 13/02, B62B 7/14

(54) **SUPPORT PLATE AND CARRYCOT**

(30) Priority: 10.01.2020 CN 202010029526
(71) Applicant: Wonderland Switzerland AG, 6312 Steinhausen (CH)
(72) Inventor: XIAO, Xiaohong, 6312 Steinhausen (CH); SHEN, Xianchen, 6312 Steinhausen (CH)
(74) Representative: Kretschmann, Dennis
(86) International application number: PCT/IB2021/000003
(87) International publication number: WO 2021/148875

(57) **Abstract**

Provided is a support plate, comprising a plate body and at least one reinforcing member. The plate body is provided with a plurality of through holes, and the reinforcing member is fixed in place with respect to the plate body. The through holes give the support plate enhanced air permeability, and the reinforcing member provides the plate body with increased support strength. Also provided is a carry cot, comprising a frame and the support plate. The support plate is connected to the frame, such that the support plate and the frame together define an accommodating space for accommodating an infant or a toddler. When the infant or the toddler lies in the carrycot, the carrycot provides not only strong support strength but also good air permeability, and is safe and comfortable.

## Description

### TECHNICAL FIELD

The present application relates to the field of baby products, and in particular to a support plate and a carrycot using the same.

### BACKGROUND

The constant progress of society, the constant development of economy, and the continuous improvement of science and technology bring people more and more consumption products, which in turn upgrades people's living level and creates highly excellent material conditions. The carrycot is one of many consumption products. For parents who have a baby in the house, the carrycot is often used to carry the baby, when taking care of the baby. The baby could sleep in the carrycot, so that the physical burden on the parents is reduced. The carrycot may also be mounted on a frame of a stroller to provide the baby with a comfortable and safe environment for sleeping and to allow the parents to take care of the baby conveniently.

Generally speaking, the carrycot is provided with a support plate for carrying a baby thereon, so that the baby can lie on the support plate in the carrycot. As the baby often moves in the carrycot, a support plate having insufficient support strength would have an adverse influence on the safety of the baby in the carrycot.

Therefore, it is necessary to provide a support plate with high structural strength for a carrycot in order to solve the above problem.

### SUMMARY

An objective of the present application is to provide a support plate that has good support strength and air permeability.

Another objective of the present application is to provide a carrycot that includes the above-mentioned support plate.

To achieve at least the above objectives, the present application provides a support plate that includes a plate body and at least a reinforcing member. The plate body is provided with a plurality of through holes and the reinforcing member is fixed in place with respect to the plate body.

Preferably, the plate body has a transverse direction and a longitudinal direction; and the reinforcing member is arranged on the plate body along the transverse direction and/or the longitudinal direction.

Preferably, a plurality of reinforcing members is provided, which include at least a transverse support bar and at least a longitudinal support bar. The transverse support bar is arranged along the transverse direction and the longitudinal support bar is arranged along the longitudinal direction.

Preferably, one of the transverse support bar and the longitudinal support bar is made of metal material, and the other one of the transverse support bar and the longitudinal support bar is made of plastic material.

Preferably, the transverse support bar and the longitudinal support bar are integrally formed.

Preferably, the support plate is formed by injection molding and the plate body and the reinforcing member are integrally formed, and the reinforcing member is formed inside the plate body.

Preferably, one of the plate body and the reinforcing member is provided with a male engaging section while the other one of the plate body and the reinforcing member is provided with a female engaging section; and the male engaging section and the female engaging section are correspondingly configured to be engaged with each other.

Preferably, the reinforcing member is provided at two ends of the reinforcing member with a male fastening section and a female fastening section, respectively; and the reinforcing member is bent from one surface of the plate body to another surface of the plate body, and thus the male fastening section and the female fastening section are engaged with each other, thereby fixing the reinforcing member in place on the plate body.

Preferably, the plate body has two end sections located opposite to each other, and an end of the reinforcing member is connected to one of the two end sections and another end of the reinforcing member is connected to the other one of the two end sections.

Preferably, the support plate further includes at least one fastening element, and the reinforcing member is fixed to the plate body via the fastening element.

Preferably, the reinforcing member is a bar, a tube or a flat piece in configuration.

Preferably, the reinforcing member is made of metal material or plastic material.

Preferably, the reinforcing member is an aluminum tube or an iron tube.

Preferably, the support plate further includes a connection section, and the support plate is connected to an external device via the connection section.

In addition, to achieve at least the above objectives, the present application further provides another type of support plate that includes a plate body. The plate body is provided with a plurality of through holes and includes a loading member and a supporting member. The loading member is fixed on the supporting member, and the loading member has a rigidity that is less than that of the supporting member.

Preferably, the supporting member includes a flat surface portion and a bent portion. The bent portion is arranged around an outer periphery of the flat surface portion and is bent relative to the flat surface portion; and the outer periphery of the loading member is flush with the bent portion.

Preferably, the plate body has a transverse direction and a longitudinal direction and the supporting member further includes a plurality of ribs. The ribs are raised relative to the flat surface portion and are connected to the bent portion. The ribs are arranged along the transverse direction and/or the longitudinal direction.

Preferably, the plate body is further provided with a plurality of notches and the loading member is provided with an indicative mark. The indicative mark is located adjacent to one of the plurality of notches.

Preferably, the loading member is made of foam material and the supporting member is made of plastic material, and the loading member has a thickness greater than that of the supporting member.

Preferably, the support plate further includes at least one fastening element, and the loading member is fixed to the supporting member via the fastening element.

Preferably, the loading member and the supporting member are integrally formed by way of insert-molding.

Compared to the existing technology, the plate body of the support plate according to the present application is provided with a plurality of through holes provided thereon, which increases air permeability. Further, the support plate with the reinforcing member or the supporting member fixed to the plate body provides the plate body with increased support strength.

Correspondingly, the present application further provides a carrycot that includes a frame and the above-described support plate. The support plate is connected to the frame, and the support plate and the frame together define a receiving space suitable for accommodating an infant or a toddler. When the infant or the toddler lies in the carrycot, the carrycot provides not only strong support strength but also good air permeability and is safe and comfortable for use.

Preferably, the carrycot further includes a fabric cover, and the support plate is laid in the fabric cover.

The present application will become clearer from the following description in conjunction with the accompanying drawings, which are used to explain embodiments of the present application.

### BRIEF DESCRIPTION OF THE DRAWINGS

FIG. 1 is a schematic perspective view of a carrycot according to an embodiment of the present application.
FIG. 2 is a schematic perspective view of the carrycot of FIG. 1 in another state.
FIG. 3 is a schematic top view of a support plate of FIG. 1.
FIG. 4 is a schematic bottom view of FIG. 3.
FIG. 5 is a schematic top view of a support plate according to a second embodiment of the present application.
FIG. 6 is a schematic top view of a support plate according to a third embodiment of the present application.
FIG. 7 is a schematic top view of a support plate according to a fourth embodiment of the present application.
FIG. 8 is a schematic bottom view of FIG. 7.
FIG. 9 is a schematic top view of a support plate according to a fifth embodiment of the present application.
FIG. 10 is a schematic perspective view of a support plate according to a sixth embodiment of the present application.
FIG. 11 is an exploded view of FIG. 10.
FIG. 12 is a partially enlarged cross-sectional view taken along line A-A in FIG. 10.

### List of Reference Numerals of Parts

- 100: carrycot
- 10: support plate
- 11: plate body
- 111: through hole
- 112: loading member
- 112a: indicative mark
- 113: supporting member
- 113a: flat surface portion
- 113b: bent portion
- 113c: rib
- 114: fastening hole
- 115: notch
- 12: fastening element
- 13: reinforcing member
- 131: male fastening section
- 133: female fastening section
- 135: transverse support bar
- 137: longitudinal support bar
- 15: connection section
- 20: receiving space
- 30: frame
- 50: fabric cover
- A-A: cross-sectional view taken along line A-A
- T: transverse direction
- L: longitudinal direction

### DETAILED DESCRIPTION OF THE INVENTION

The present application is now described in detail with reference to the accompanying drawings. In the drawings, similar reference numerals denote similar parts.

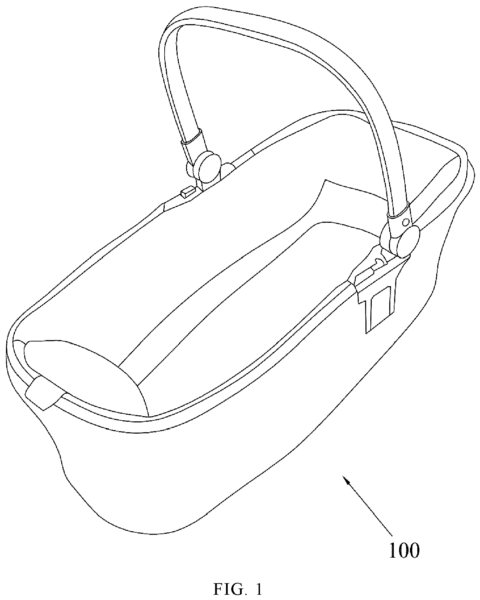

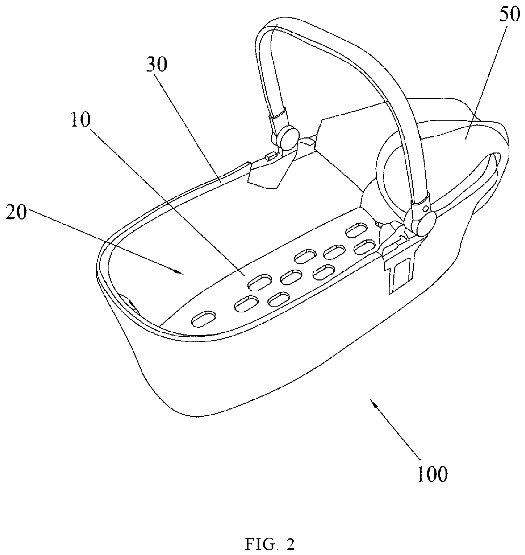

Please refer to FIGS. 1 and 2, FIG. 1 is a schematic perspective view of a carrycot according to an embodiment of the present application, and FIG. 2 is a schematic perspective view of the carrycot of FIG. 1 in another state. In the embodiment, the carrycot 100 includes a support plate 10, a frame 30, and a fabric cover 50. The support plate 10 is connected to the frame 30, and the frame 30 and the support plate 10 together define a receiving space 20. The support plate 10 is laid in the fabric cover 50. The receiving space 20 is suitable for accommodating an infant or a toddler.

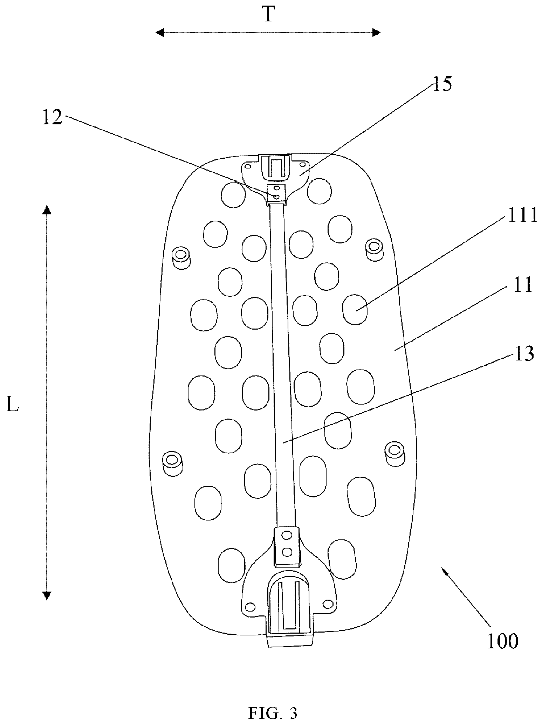

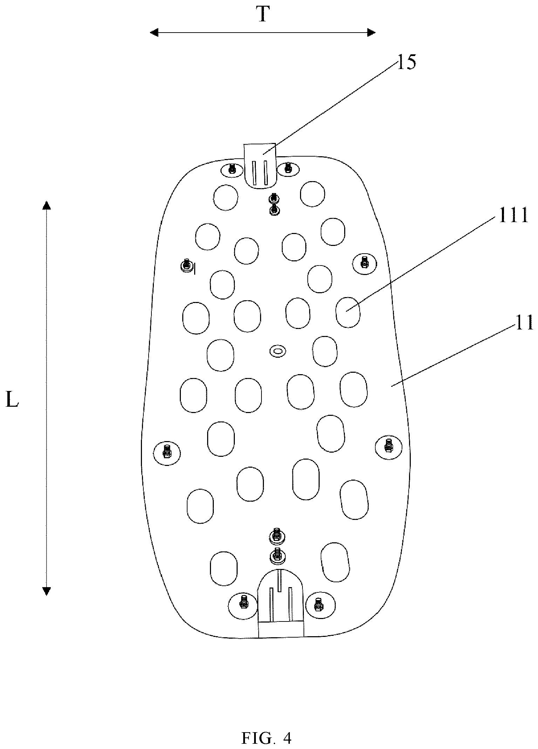

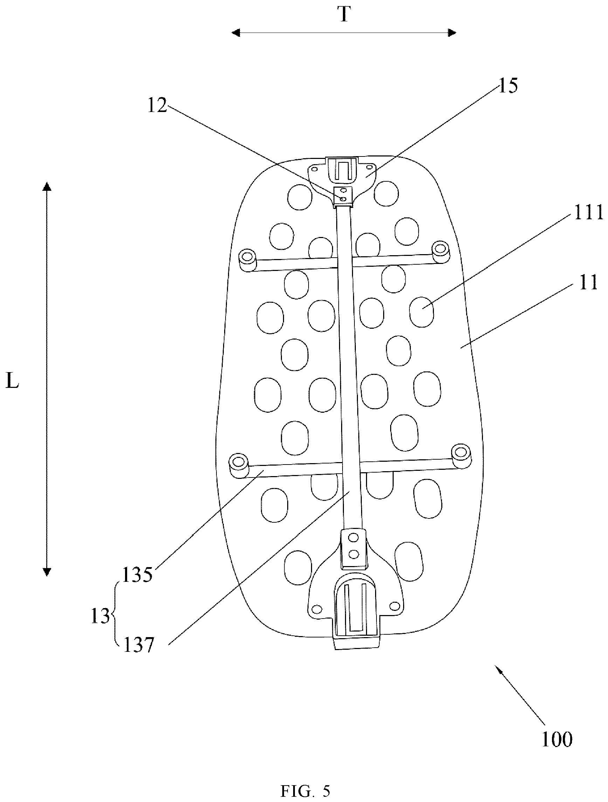

Please refer to FIGS. 3 and 4, FIG. 3 is a schematic top view of the support plate of FIG. 1, and FIG. 4 is a schematic bottom view of FIG. 3. Specifically, the support plate 10 includes a plate body 11 and at least one reinforcing member 13. The plate body 11 is provided with a plurality of through holes 111, and the reinforcing member 13 is fixed in place relative to the plate body 11. The number of the reinforcing member 13 may be odd or even, such as 1, 2, 3, 10, 20, 30, etc., which are not limited here. On the other hand, the plate body 11 has a transverse direction T and a longitudinal direction L; and the reinforcing member 13 may be arranged along the transverse direction T or the longitudinal direction L of the plate body 11; and the reinforcing member 13 may be arranged. Of course, the reinforcing member 13 may also be arranged along both the transverse direction T and the longitudinal direction L of the plate body 11 at the same time. For example, as an embodiment shown in FIG. 5, a reinforcing member 13 is arranged along the longitudinal direction L of the plate body 11 and two reinforcing members 13 are arranged along the transverse direction T of the plate body 11. It is to be noted that the reinforcing member 13 each can be a bar, a tube or a flat piece in configuration, depending on the structural requirements of the carrycot 100. In the present embodiment, the reinforcing member 13 is non-restrictively illustrated as a bar in configuration.

Further, as shown in FIG. 3, the support plate 10 also includes connection sections 15, via which the support plate 10 is connected to an external device, such as the frame 30, such that the support plate 10 and the frame 30 can be easily assembled together.

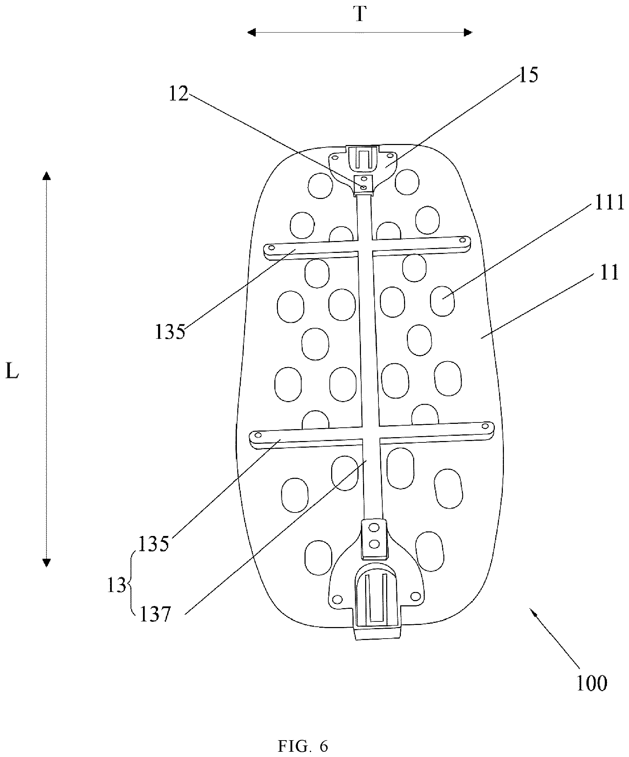

Please refer to FIGS. 5 and 6, FIG. 5 is a schematic top view of the support plate according to a second embodiment of the present application, and FIG. 6 is a schematic top view according to a third embodiment of the present application. As shown in FIGS. 3, 5 and 6, the support plate 10 also includes at least one fastening element 12, which may be, for example, a screw, a bolt or a rivet without being particularly limited thereto. The reinforcing member 13 is fixed to the plate body 11 via the fastening element 12. In addition, the plate body 11 has opposed front and rear end sections and opposed left and right end sections. The reinforcing member 13 is connected at an end to one of the end sections of the plate body 11 and at another end to another one of the end sections of the plate body 11. In this manner, the reinforcing member 13 extends through the entire plate body 11 along the transverse direction T or along the longitudinal direction L to increase the support strength of the plate body 11.

It is to be noted that, in other embodiments, one of the reinforcing member 13 and the plate body 11 is provided with a male engaging section (not shown) while the other one of the reinforcing member 13 and the plate body 11 is provided with a female engaging section (not shown), and the male engaging section and the female engaging section are correspondingly configured to engage with each other. For instance, the reinforcing member 13 is provided at two ends with a male engaging section each, and the plate body 11 is provided at corresponding positions with female engaging sections. The reinforcing member 13 is fixed to the plate body 11 through engagement of the male engaging sections with the corresponding female engaging sections. However, it is understood the present application is not particularly limited thereto. In other embodiments, the reinforcing member 13 is provided at two ends with female engaging sections and the plate body 11 is provided at corresponding positions with male engaging sections. In this case, the reinforcing member 13 may be fixed to the plate body 11 through engagement of the male engaging sections with the female engaging sections.

Please refer to FIGS. 5 and 6 again. As shown, a plurality of reinforcing members 13 is provided, and two transverse support bars 135 and one longitudinal support bar 137 are included. The transverse support bars 135 are arranged along the transverse direction T of the plate body 11 while the longitudinal support bar 137 is arranged along the longitudinal direction of the plate body 11. In this manner, the support strength of the support plate 10 is further increased. It is to be noted that the reinforcing members 13 may be made of metal material or plastic material. In the case where the reinforcing member 13 is made of metal material, the reinforcing members 13 may be aluminum tubes or iron tubes without being particularly limited thereto. Further, the transverse support bars 135 and the longitudinal support bar 137 provided on the plate body 11 may be made of the same material or different materials. For example, in FIG. 5, the transverse support bars 135 may be made of plastic material while the longitudinal support bar 137 may be an iron tube, which is intended to reduce the cost of the reinforcing members 13. Optionally, as shown in FIG. 6, the transverse support bars 135 and the longitudinal support bar 137 are integrally formed and are both iron tubes, so as to provide largely increased support strength and prolonged service life. However, it is understood that, in actual implementation of the present application, the reinforcing members 13 are not particularly limited to this embodiment.

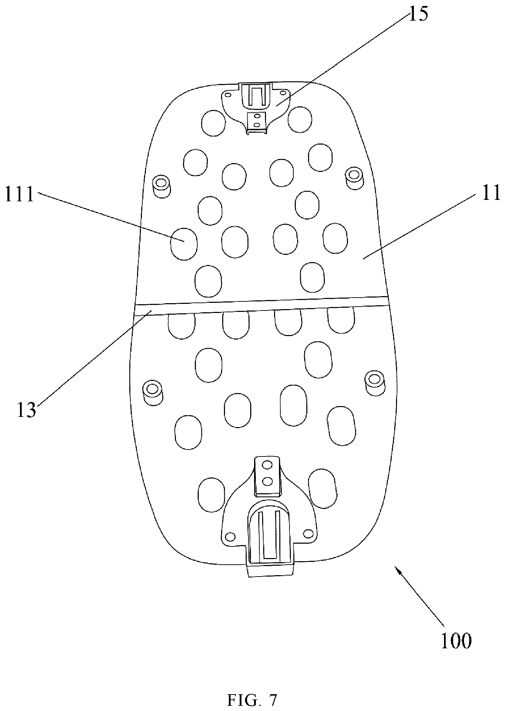

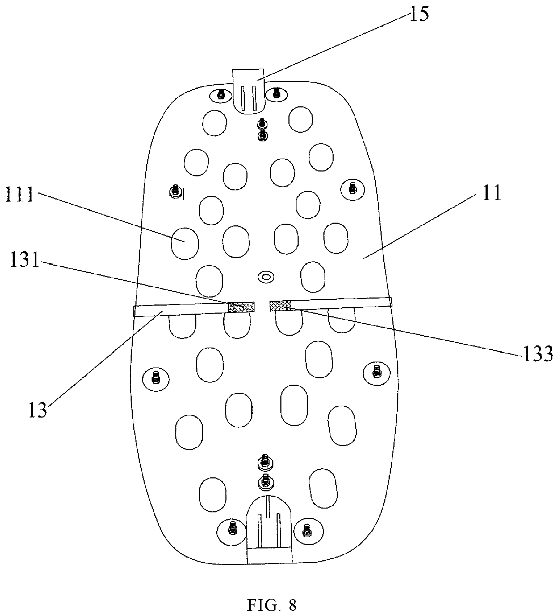

Please refer to FIGS. 7 and 8, FIG. 7 is a schematic top view of the support plate according to a fourth embodiment of the present application, and FIG. 8 is a schematic bottom view of the support plate shown in FIG. 7. In the fourth embodiment, the reinforcing member 13 is provided at two ends with a male fastening section 131 and a female fastening section 133, respectively. The reinforcing member 13 is bent at two opposite end sections of the plate body 11, so that two ends of the reinforcing member 133 extend from a front surface of the plate body 11 to a rear surface of the plate body 11 and the male fastening section 131 and the female fastening section 133 are engaged with each other, thereby fixing the reinforcing member 13 in place on the plate body 11. With this arrangement, a connection joint between the reinforcing member 13 and the plate body 11 is located behind the plate body 11, so that any discomfort due to the baby lying on the connection joint located on the front surface of the plate body 11 is avoided. More specifically, the male fastening section 131 and the female fastening section 133 may be embodied as a fixing band structure or a hook-and-loop fastener, however, the present application is not limited thereto.

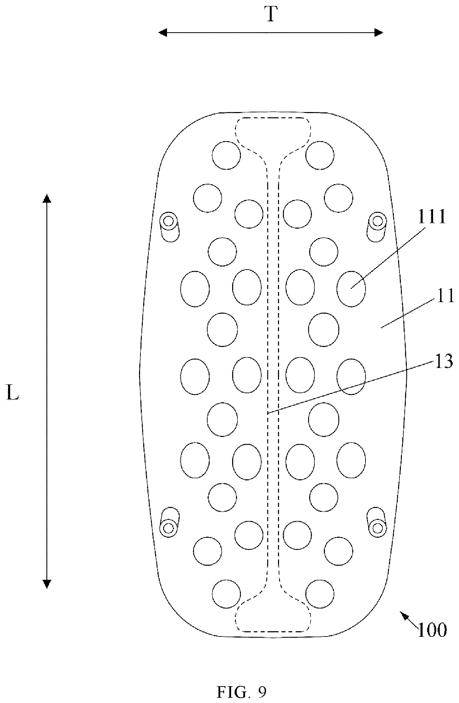

Please refer to FIG. 9, FIG. 9 is a schematic top view of the support plate according to a fifth embodiment of the present application. The support plate 10 in the fifth embodiment is similar to that in FIG. 3. However, the support plate 10 in FIG. 9 is different from the support plate 10 in FIG. 3 in that the plate body 11 and the reinforcing member 13 of the support plate 10 in FIG. 9 are integrally formed, and the reinforcing member 13 is formed inside the plate body 11.

More specifically, the support plate 10 in the fifth embodiment is formed by injection molding. The plate body 11 is formed as a hollow structure, and the reinforcing member 13 is arranged along the transverse direction T and/or the longitudinal direction L of the plate body 11 to enhance the supporting structure of the plate body 11. With these arrangements, procedure of assembling the reinforcing member 13 to the plate body 11; and since the reinforcing member 13 is formed inside the plate body 11, the structure of the plate body 11 is strengthened and the reinforcing member 13 may not be contacted by the baby lying in the carrycot 10, which brings the increased comfortableness for the baby.

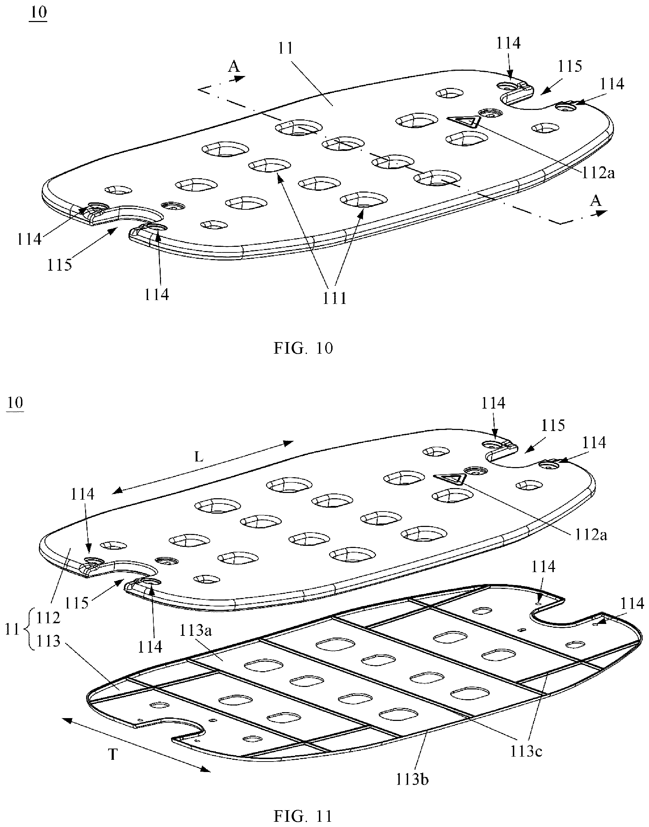

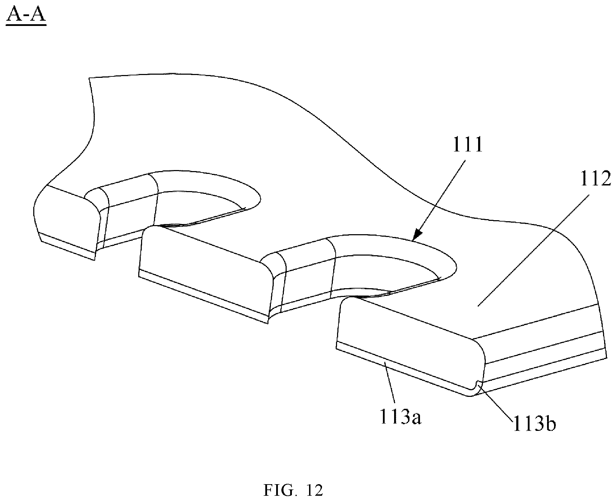

Please refer to FIGS. 10, 11 and 12, FIG. 10 is a schematic perspective view of the support plate according to a sixth embodiment of the present application, FIG. 11 is an exploded view of the support plate in FIG. 10, and FIG. 12 is a partially enlarged cross-sectional view taken along line A-A in FIG. 10. The support plate 10 in the sixth embodiment includes a plate body 11 that is similar to that in the first to the fourth embodiment shown in FIGS. 3 to 8 but has a plurality of through holes 111 formed thereon. However, the support plate 10 in the sixth embodiment does not include any reinforcing member 13. Instead, the plate body 11 includes a loading member 112 and a supporting member 113. The loading member 112 is fixed to the supporting member 113, and the loading member 112 has rigidity smaller than that of the supporting member 113.

More specifically, in the sixth embodiment, the loading member 112 and the supporting member 113 are made of different materials. The loading member 112 is made of, for example, foam material while the supporting member 113 is made of, for example, plastic material. Further, in consideration of a possible deformation of the loading member 112 when the baby lies thereon, the loading member 112 has a thickness larger than that of the supporting member 113. When the baby lies on the support plate 10, the loading member 112 is deformed in response to the weight of the baby to avoid the baby from feeling uncomfortable. Further, since the supporting member 113 has rigidity larger than that of the loading member 112, the plate body 11 has an increased overall structural strength to ensure the stability of the carrycot 100 when a baby is carried therein.

Further, as shown in FIG. 12, the supporting member 113 includes a flat surface portion 113a and a bent portion 113b. The bent portion 113b is arranged around an outer periphery of the flat surface portion 113a and is bent upward relative to the flat surface portion 113a. The loading member 112 is fixed to the supporting member 113 by means of gluing or the like. Optionally, the loading member 112 and the supporting member 113 is integrally formed by way of insert-molding. After the loading member 112 and the supporting member 113 are fully assembled, the outer periphery of the loading member 112 is flush with the bent portion 113b. In this manner, the smoothness of the overall appearance of the support plate 10 is improved, and the support plate 10 is less likely to be interfered with or in frictional contact with other external members.

In addition, as shown in FIG. 11, the supporting member 113 further includes a plurality of ribs 113c, which are raised relative to the flat surface portion 113a and are connected to the bent portion 113b, and are arranged along the transverse direction T and/or the longitudinal direction L of the plate body 11. Therefore, the ribs 113c have a similar effect to the reinforcing member 13 in terms of the structural shape, that is, the ribs 113c extend a full length of the plate body 11 along the transverse direction T or the longitudinal direction L, which increases the support strength of the plate body 11 without additionally increasing the volume occupied by the plate body 11.

Similar to the embodiments shown in FIGS. 3 to 8, the loading member 112 and the supporting member 113 in the sixth embodiment are formed with fastening holes 114 for fixing purpose. When the loading member 112 is not glued to the supporting member 113, the loading member 112 can be fixed to the supporting member 113 by passing the fastening elements 12 (not shown) through the fastening holes 114. Of course, when the loading member 112 is glued to the supporting member 113, a user may use the fastening elements 12 in addition to the glue to further enhance the bonding relation between the loading member 112 and the supporting member 113. However, it is understood the present application is not particularly limited thereto.

On the other hand, to facilitate easy mounting of the support plate 10 into the frame 30 correctly, the plate body 11 in the sixth embodiment is further formed with a plurality of notches 115. In the sixth embodiment, there are non-restrictively illustrated two notches 115. Meanwhile, the loading member 112 is provided with an indicative mark 112a, which is, for example, a triangular arrow located adjacent to one of the notches 115. With these arrangements, the user can easily find the direction in which the support plate 10 should be set relative to the frame 30 when assembling the support plate 10 to the carrycot 100, making the assembling procedures time and labor saving.

Compared to the conventional art, the plate body 11 of the support plate 10 according to the present application is provided with a plurality of through holes 111, enabling the plate body 11 to have improved air permeability. On the other hand, the support plate 10 with the reinforcing member 13 or the supporting member 113 provides the plate body 11 with increased support strength and is able to provide the baby in the carrycot 100 with a stably and comfortable receiving space 20.

While the present application has been described by means of specific embodiments, it is understood that the preferred embodiments are only illustrative and not intended to limit the present application in any way. Numerous modifications, variations and equivalent combinations could be made thereto by those skilled in the art without departing from the scope and spirit of the present application set forth in the claims.

## Claims

1. A support plate, comprising:
a plate body; and
at least a reinforcing member;
wherein the plate body is provided with a plurality of through holes, and the reinforcing member is fixed in place with respect to the plate body.

2. The support plate of claim 1, wherein the plate body has a transverse direction and a longitudinal direction, and the reinforcing member is provided on the plate body along the transverse direction and/or the longitudinal direction.

3. The support plate of claim 2, wherein a plurality of reinforcing members is provided, the plurality of reinforcing members includes at least one transverse support bar and at least one longitudinal support bar, and the transverse support bar is arranged along the transverse direction and the longitudinal support bar is arranged along the longitudinal direction.

4. The support plate of claim 3, wherein one of the transverse support bar and the longitudinal support bar is made of metal material, and the other one of the transverse support bar and the longitudinal support bar is made of plastic material.

5. The support plate of claim 3, wherein the transverse support bar and the longitudinal support bar are integrally formed.

6. The support plate of claim 1, wherein the support plate is formed by injection molding, the plate body and the reinforcing member are integrally formed, and the reinforcing member is formed inside the plate body.

7. The support plate of claim 1, wherein one of the plate body and the reinforcing member is provided with a male engaging section while the other one of the plate body and the reinforcing member is provided with a female engaging section, and the male engaging section and the female engaging section are correspondingly configured to be engaged with each other.

8. The support plate of claim 1, wherein the reinforcing member is provided at two ends of the reinforcing member with a male fastening section and a female fastening section, respectively, and the reinforcing member is bent from one surface of the plate body to another surface of the plate body, and thus the male fastening section and the female fastening section are engaged with each other, thereby fixing the reinforcing member in place on the plate body.

9. The support plate of claim 1, wherein the plate body has two end sections located opposite to each other, an end of the reinforcing member is connected to one of the two end sections, and another end of the reinforcing member is connected to the other one of the two end sections.

10. The support plate of claim 1, further comprising at least one fastening element, the reinforcing member is fixed to the plate body via the fastening element.

11. The support plate of claim 1, wherein the reinforcing member is a bar, a tube or a flat piece in configuration.

12. The support plate of claim 1, wherein the reinforcing member is made of metal material or plastic material.

13. The support plate of claim 12, wherein the reinforcing member is an aluminum tube or an iron tube.

14. The support plate of claim 1, further comprising a connection section, and the support plate is connected to an external device via the connection section.

15. A support plate, comprising a plate body being provided with a plurality of through holes and comprising:
a loading member; and
a supporting member,
wherein the loading member is fixed on the supporting member, and the loading member has a rigidity that is less than that of the supporting member.

16. The support plate of claim 15, wherein the supporting member comprises a flat surface portion and a bent portion, the bent portion is arranged around an outer periphery of the flat surface portion and is bent relative to the flat surface portion, and the outer periphery of the loading member is flush with the bent portion.

17. The support plate of claim 16, wherein the plate body has a transverse direction and a longitudinal direction, the supporting member further comprises a plurality of ribs, the ribs are raised relative to the flat surface portion and are connected to the bent portion, and the ribs are arranged along the transverse direction and/or the longitudinal direction.

18. The support plate of claim 15, wherein the plate body is further provided with a plurality of notches, the loading member is provided with an indicative mark, and the indicative mark is located adjacent to one of the plurality of notches.

19. The support plate of claim 15, wherein the loading member is made of foam material, the supporting member is made of plastic material, and the loading member has a thickness greater than that of the supporting member.

20. The support plate of claim 15, further comprising at least one fastening element, and the loading member is fixed to the supporting member via the fastening element.

21. The support plate of claim 15, wherein the loading member and the supporting member are integrally formed by way of insert-molding.

22. A carrycot comprising a frame, wherein the carrycot further comprises a support plate of any one of claims 1 to 21, the support plate is connected to the frame, and the frame and the support plate together define a receiving space, which is suitable for accommodating an infant or a toddler.

23. The carrycot of claim 22, further comprising a fabric cover, and the supporting member is laid in the fabric cover.
